# EUROPÄISCHE PATENTSCHRIFT

(11) **EP 3 587 758 B1**
(45) Veröffentlichungstag und Bekanntmachung des Hinweises auf die Patenterteilung: **14.02.2024**
(21) Anmeldenummer: 19183362.3
(22) Anmeldetag: 28.06.2019
(51) Int. Cl.: F01N 3/20, C01C 1/08, B01J 19/00, B01J 7/02

(54) **REAKTOR ZUR THERMOHYDROLYSE VON HARNSTOFF**
REACTOR FOR THE THERMOHYDROLYSIS OF UREA
RÉACTEUR DESTINÉ À LA THERMOHYDROLYSE DE L'URÉE

(30) Priorität: 28.06.2018 DE 102018210622
(43) Veröffentlichungstag der Anmeldung: 01.01.2020
(73) Patentinhaber: DMP Kälberberg GmbH, 96155 Buttenheim (DE)
(72) Erfinder: Pley, Martin, 96135 Stegaurach (DE)
(74) Vertreter: Ricker, Mathias

(56) Entgegenhaltungen:
- WO-A1-2009/011080
- CN-A- 107 188 198
- DE-A1-102006 004 170
- DE-A1-102009 025 135
- DE-A1-102011 106 233
- US-A1- 2008 236 147
- US-A1- 2017 328 253

## Beschreibung

Die Erfindung betrifft einen Reaktor zur Erzeugung von Ammoniak aus Harnstoff durch Thermohydrolyse. Das erzeugte Ammoniak kann zur selektiven katalytischen Reduktion von Stickoxiden verwendet werden.

Die selektive katalytische Reduktion (*selective catalytic reduction, SCR*) bezeichnet eine Technik zur Reduktion von Stickoxiden in Abgasen von Feuerungsanlagen, Müllverbrennungsanlagen, Gasturbinen, Industrieanlagen und Verbrennungsmotoren. Die chemische Reaktion am SCR-Katalysator ist selektiv, das heißt, dass bevorzugt die Stickoxide reduziert werden, während unerwünschte Nebenreaktionen wie die Oxidation von Schwefeldioxid zu Schwefeltrioxid weitgehend unterdrückt werden.

Für die Reaktion wird Ammoniak benötigt, das dem Abgas zugemischt wird. Die Produkte der Reaktion von Ammoniak mit den Stickoxiden sind Wasser und Stickstoff.

Zur Erzeugung des Ammoniaks wird bei Dieselmotoren typischerweise eine Harnstofflösung verwendet, die in einem separaten Tank mitgeführt wird. Eine genormte Zusammensetzung nach ISO 22241 ist eine Lösung mit 32,5 % reinem Harnstoff in demineralisiertem Wasser. Die wässrige Lösung wird vor dem SCR-Katalysator in den Abgasstrang eingesprüht, z. B. mittels Dosierpumpe oder Injektor. Aus der Harnstoff-Wasser-Lösung entstehen durch Thermolyse Ammoniak und Isocyansäure, die ihrerseits durch Wasser zu weiterem Ammoniak und Kohlendioxid hydrolisiert wird.

Die Menge des benötigten eingespritzten Harnstoffs ist von der motorischen Stickoxidemission und damit von der momentanen Drehzahl und dem Drehmoment des Motors abhängig. Somit muss zur optimalen Gestaltung des Verfahrens die eindosierte Harnstoffmenge auf die Fahrleistung abgestimmt sein.

In der Automobilindustrie können beispielsweise elektrisch beheizte Metallkatalysatoren zur Erzeugung von Ammoniak aus der Harnstofflösung verwendet werden.

DE 10 2006 004170 offenbart eine Anordnung zur Verringerung der Stickoxidemissionen von Kraftfahrzeugen. Diese enthält einen Thermolysereaktor, in dem Harnstoff durch Wärme in Ammoniak und Isocyansäure umgewandelt wird. Der Thermolysereaktor wird durch eine exotherme Reaktion in dem katalytischen Konverter erwärmt, falls notwendig unterstützt durch Einspritzen von Kraftstoff in den Konverter.

WO 2009/011080 offenbart eine Abgasreinigungsvorrichtung mit einem Partikelfilter, einem selektiven Reduktionskatalysator und einem Verbindungsströmungskanal, so dass Harnstoff-Wasser einem Mittelstromabschnitt des Verbindungsströmungskanals zugesetzt werden kann, wobei die Abgasreinigungsvorrichtung eine Wirbelströmungserzeugungseinrichtung zum Erzeugen einer Wirbelströmung des Abgases innerhalb des Verbindungsströmungskanals umfasst. Eine Umgehungskammer ist so strukturiert, dass sie einen Teil des Abgases aus einem Bereich mit relativ hohem Druck stromaufwärts der Position der Wirbelströmungserzeugung durch die Wirbelströmungserzeugungseinrichtung abzieht und dasselbe zu der Position der Wirbelströmung führt. Ein Unterzugabemittel dient zum zwangsweisen Hydrolysieren von Harnstoff-Wasser durch eine Heizvorrichtung und einen Hydrolysekatalysator zu Ammoniak und zum Zugeben des Ammoniaks zu dem Abgas, das in der Umgehungskammer strömt. Ein Hauptzugabemittel dient zum Zugeben von Harnstoff-Wasser zu dem Hauptabgasstrom auf der stromaufwärtigen Seite des Verbindungsströmungskanals.

CN 107 18 198 offenbart ein Harnstoff-Hydrolyse- und Pyrolyseverbindungs-Ammoniak-Herstellungssystem für die Denitrierung in einem Wärmekraftwerk. Das System zur Herstellung von hydrolytischem und pyrolytischem Harnstoffverbindungs-Ammoniak umfasst ein Einlassrohr für eine Harnstofflösung, einen Hydrolysereaktor, einen Entkarbonisierungstank, ein Abwasserrohr für entsalztes Wasser und ein Abgasgebläse, wobei das Einlassrohr für die Harnstofflösung mit einem Einlass in der Seitenfläche vom Hydrolysereaktor verbunden ist. Der Boden des Hydrolysereaktors ist mit einem Dampferhitzer zum Erhitzen der Harnstofflösung in dem Hydrolysereaktor versehen.

US 2008 0236147 offenbart eine Reduktionsmittelfördereinheit für die Nachbehandlung mit selektiver katalytischer Reduktion (SCR) für Fahrzeuge. Die Einheit umfasst einen Fluidinjektor, der so konstruiert und angeordnet ist, dass er einem Abgasströmungsweg stromaufwärts eines SCR-Katalysators zugeordnet ist. Der Fluidinjektor hat einen Fluideinlass und einen Fluidauslass, wobei der Fluideinlass so konstruiert und angeordnet ist, dass er eine Harnstofflösungsquelle aufnimmt, und der Fluidauslass so konstruiert und angeordnet ist, dass er direkt mit dem Abgasströmungsweg kommuniziert, um die Einspritzung von Harnstofflösung in den Abgasströmungsweg zu steuern.

US 2017 0328253 offenbart eine Reduktionsmittel-Zuführvorrichtung umfassend einen Tank zum Lagern eines Reduktionsmittels, eine Pumpeinheit zum Pumpen des Reduktionsmittels, einen Reduktionsmittel-Zufuhrkanal zum Zuführen des Reduktionsmittels, eine Injektionsdüse zum Einspritzen des Reduktionsmittels in ein Abgasrohr, eine Rückzugseinheit, um das Reduktionsmittel in Richtung des Tanks zu ziehen, und eine Steuerung.

Der Erfindung liegt die Aufgabe zugrunde Ammoniak in möglichst einfacher und verlässlicher sowie sicherheitstechnisch leicht zu handhabender Form bereitzustellen.

Diese Aufgabe wird erfindungsgemäß durch die Merkmale des Anspruchs 1 oder 2 gelöst. Vorteilhafte Weiterbildungen ergeben sich aus den abhängigen oder nebengeordneten Ansprüchen.

Die Erfindung betrifft demzufolge in einer ersten Ausführungsform einen Reaktor in Form eines Zylinders oder Prismas zur Thermohydrolyse von Harnstoff zu Ammoniak wie in Anspruch 1 definiert.

In einer zweiten Ausführungsform betrifft die Erfindung einen Reaktor in Form eines Zylinders oder Prismas zur Thermohydrolyse von Harnstoff zu wie in Anspruch 2 definiert.

Es ist ein ganz besonderer Vorteil der vorliegenden Erfindung, dass zur Thermohydrolyse des in den Reaktor eindosierten Harnstoffs durch die Ausgestaltung des Reaktors im Reaktor Flächen vermieden werden, an denen durch eine ungenügende Beheizung Harnstoff bzw. Kondensationsprodukte von Harnstoff kondensieren oder im Reaktor verbleiben könnten, die keiner Thermohydrolyse unterzogen würden. Diese Anteile würden dann der optimalen Abstimmung der benötigten Ammoniakmenge auf die erzeugten Stickoxide des SCR-Verfahrens fehlen und somit das Verfahren negativ beeinflussen. Ferner ist es vorteilhaft, dass auf die Verwendung eines Hydrolysekatalysators verzichtet werden kann.

Erfindungsgemäß ist der Reaktor zylindrisch oder prismatisch. Erfindungsgemäß ist auch die Reaktionskammer zylindrisch oder prismatisch.

Zweckmäßigerweise ist der Reaktor aus einem geeigneten Stahl druckfest aufgebaut.

Weiter vorzugsweise ist der Reaktor stehend angeordnet, das heißt, dass die Längsrichtung des Zylinders oder Prismas senkrecht zur Erdoberfläche angeordnet ist.

Erfindungsgemäß weist der Reaktor eine Zuführeinrichtung zur Zuführung eines Harnstoff-Wasser-Gemisches in die Reaktionskammer auf. Die Zuführeinrichtung ist als Magnetventil ausgestaltet. Das Magnetventil kann mit einer aktiven oder passiven Kühlung ausgestattet sein, vorzugsweise einer Wasser- oder Luftkühlung.

Das Magnetventil kann über die Motorsteuerung gesteuert werden. Es ist somit eingerichtet, die für den SCR-Betrieb benötigte Menge an Harnstoff der Reaktionskammer des Reaktors zuzuführen.

Die Zuführeinrichtung ist erfindungsgemäß über ein Verbindungselement mit der Reaktionskammer verbunden. Das Verbindungselement ist ein Flansch, der mit der Reaktionskammer verbunden ist. Die Zuführeinrichtung ist ihrerseits vorzugsweise über einen Klemmring, Spannring oder eine Verschraubung mit dem Flansch verbunden.

Somit kann bei einer Störung der Zuführeinrichtung diese vom Reaktor leicht entfernt und gegebenenfalls ausgetauscht werden.

Die Zuführeinrichtung, nämlich das Magnetventil, weist ausgangsseitig eine Lochscheibe auf.

Vorzugsweise weisen die Löcher der Lochscheibe einen Durchmesser von 15 µm bis 500 µm auf. Vorzugsweise weist die Lochscheibe 2 bis 10 dieser Löcher oder Öffnungen auf.

Wird eine wässrige Harnstofflösung, vorzugsweise eine Harnstofflösung mit einer Konzentration c von 25 % < c < 40 % unter einem Vordruck von vorzugsweise 0.5-10 bar der Zuführeinrichtung zugeführt, so wird die Lösung ausreichend zerstäubt, dass sie in der Reaktionskammer optimal thermohydrolisiert werden kann.

Das Verbindungselement, nämlich der Flansch, weist eine Öffnung zum Inneren der Reaktionskammer auf, wobei der Sprühwinkel der Lochscheibe nicht die Wände des Verbindungselements tangiert. Da das Verbindungselement nicht beheizt ist, kann somit ein unerwünschtes Kondensieren von Harnstoff auf diesem Element verhindert oder zumindest so weit wie möglich verhindert werden.

Erfindungsgemäß ist in der ersten Ausführungsform die der Zuführeinrichtung bzw. dem Verbindungselement, nämlich dem Flansch, gegenüberliegende Seite in der zylindrischen oder prismatischen Reaktionskammer gasdicht verschlossen. Beim stehend angeordneten Reaktor stellt diese gasdicht verschlossene Seite den Boden der Reaktionskammer bzw. des Reaktors dar.

Erfindungsgemäß weist der Reaktor bzw. die Reaktionskammer eine Abführeinrichtung zur Abführung des in der Reaktionskammer gebildeten Ammoniak-Wasser-Gemischs aus der Reaktionskammer auf. Die Abführeinrichtung ist als rohrförmige Ausgangsleitung ausgestaltet. Vorzugsweise weist die rohrförmige Ausgangsleitung einen Außendurchmesser von 6 bis 14 mm auf.

Vorzugsweise ist die Reaktionskammer mit einer im Winkel (zum Flansch) zwischen 30° und 120° angesetzten rohrförmigen Abführeinrichtung versehen, die in der oberen Hälfte des Reaktors bezogen auf die Lage des Verbindungselements angeordnet ist.

Erfindungsgemäß ist in der zweiten Ausführungsform das Verbindungselement auf einem Ende der Reaktionskammer angeordnet und die Abführeinrichtung befindet sich am gegenüberliegenden anderen Ende der Reaktionskammer. Beim stehend angeordneten Reaktor stellt das Ende der Reaktionskammer, an der sich die Abführeinrichtung befindet, den Boden der Reaktionskammer bzw. des Reaktors dar.

In der zweiten Ausführungsform sind vorzugsweise die Seitenwände der Reaktionskammer des Reaktors gasdicht verschlossen.

Vorzugsweise ist in der zweiten Ausführungsform die Reaktionskammer mit einer angesetzten rohrförmigen Abführeinrichtung versehen, vorzugsweise wobei die rohrförmige Abführeinrichtung mit dem Boden der Reaktionskammer des Reaktors einen Winkel zwischen 30° und 120° einschließt.

Die Abführeinrichtung ist vorzugsweise mittig am genannten Ende angebracht, vorzugsweise dem Boden.

Vorzugsweise ist ein Temperaturfühler bzw. Thermoelement durch eine ebenfalls vorhandene Verschraubung auf einer nicht der Abführeinrichtung entsprechenden Seite des Zylinders oder Prismas angebracht, bevorzugt mittig. Mit Hilfe des Thermoelements kann die Temperatur in der Reaktionskammer des Reaktors überprüft und eingestellt werden.

Erfindungsgemäß weist der Reaktor eine Einrichtung zur Beheizung der Innenwände der Reaktionskammer auf. Diese Einrichtung ist so eingerichtet, dass sie genügend Wärme erzeugen kann, die ausreicht, das beim Betrieb des Reaktors das in der Reaktionskammer befindliche Harnstoff-Wasser-Gemisch der Thermohydrolyse von Harnstoff zu Ammoniak zu unterwerfen.

Dazu ist vorzugsweise im Inneren der Reaktionskammer eine durchgehende Wicklung eines mineralisolierten Widerstandsheizers in Form eines mineralisolierten Widerstandsdrahtes eingebracht, die durch eine Seite des Zylinders oder des Prismas nach außen geführt wird. Vorzugsweise ist diese Durchführungsstelle mittels Hartlötens dicht verschlossen. Außerhalb des Zylinders oder Prismas wird diese Wicklung als sogenannter Kaltleiter weitergeführt.

Erfindungsgemäß muss die Wicklung neben den inneren Seiten der zylindrischen oder prismatischen Reaktionskammer auch den Boden mit mindestens einem Strang überdecken, um den Boden auf eine Temperatur zu erhitzen, die ausreicht, die Thermohydrolyse zu gewährleisten und so ein unerwünschtes Kondensieren von Harnstoff an diesem Ende der Reaktionskammer zu vermeiden.

Vorzugsweise weist der mineralisolierte Widerstandsdraht einen Durchmesser von 1 bis 6 mm auf.

Vorzugsweise wird der mineralisolierte Heizdraht bei einer Betriebsspannung zwischen 12 und 30 V und einer elektrischen Leistung zwischen 1800 Watt/l und 4500 W/l bezogen auf das Innenvolumen des Prismas betrieben. Damit kann die Temperatur im Inneren der Reaktionskammer so eingestellt werden, dass sie ausreicht, Harnstoff vollständig oder nahezu vollständig zu thermohydrolisieren.

Die Temperatur im Inneren der Reaktionskammer kann vorzugsweise durch eine logische Steuerung in einen Bereich von 350 °C bis 650 °C geregelt werden.

Vorzugsweise ist die Abführeinrichtung des erfindungsgemäßen Reaktors mit einer Abgasleitung verbunden, vorzugsweise über eine Klemmringverschraubung oder Verschweißung, derart, dass diese Verbindungsstelle vor einem SCR-Katalysator liegt, der in der Abgasleitung angebracht ist.

Der SCR-Katalysator zeichnet sich in einer bevorzugten Ausführungsform dadurch aus, dass er ein beschichteter Metallträger ist, wobei die Beschichtung mindestens eine oxidische Verbindung des Titans oder des Kupfers enthält. Vorzugsweise ist dem SCR-Katalysator ein beschichteter Träger nachgeschaltet, der so eingerichtet ist, dass dessen Beschichtung überschüssiges Ammoniak in Stickstoff oder Stickoxide umwandelt

Es wird auch ferner ein Verfahren zur Thermohydrolyse von Harnstoff in Ammoniak offenbart, aufweisend die Stufen (A) und (B):
(A) Zuführen eines Harnstoff-Wasser-Gemisches in eine Reaktionskammer eines Reaktors wie vorstehend definiert, wobei die Reaktionskammer auf eine Temperatur im Bereich von 350 °C bis 650 °C beheizt ist;
(B) Abführen des in Stufe (A) gebildeten Ammoniak-Wasser-Gemisches aus der Reaktionskammer.

Die Erfindung betrifft weiter ferner ein Verfahren zur SCR-Katalyse von Stickoxiden, aufweisend die Stufen (A) bis (C):
(A) Zuführen eines Harnstoff-Wasser-Gemisches in eine Reaktionskammer eines Reaktors wie vorstehend definiert, wobei die Reaktionskammer auf eine Temperatur im Bereich von 350 °C bis 650 °C beheizt ist;
(B) Abführen des in Stufe (A) gebildeten Ammoniak-Wasser-Gemisches aus der Reaktionskammer;
(C) Einspeisen des in (B) erhaltenen Ammoniak-Wasser-Gemisches in eine Abgasleitung mit einem SCR-Katalysator, wobei die Abführeinrichtung des Reaktors mit der Abgasleitung verbunden ist, derart, dass die Verbindungsstelle vor dem SCR-Katalysator liegt.

Der Begriff "Ammoniak-Wasser-Gemisch" wie in Stufe (B) verwendet, bedeutet auch, dass das Wasser in Dampfform vorliegt.

## Patentansprüche

1. Reaktor in Form eines Zylinders oder Prismas zur Thermohydrolyse von Harnstoff zu Ammoniak, aufweisend:
(A) eine Reaktionskammer in Form eines Zylinders oder eines Prismas mit
(i) einer Zuführeinrichtung zur Zuführung eines Harnstoff-Wasser-Gemisches in die Reaktionskammer, wobei die Zuführeinrichtung über ein Verbindungselement mit der Reaktionskammer verbunden ist, und wobei die Zuführeinrichtung so eingerichtet ist, dass sie bei Zuführung des Harnstoff-Wasser-Gemisches in die Reaktionskammer das Kontaktieren des Harnstoff-Wasser-Gemisches mit dem Verbindungselement verhindert;
wobei das Verbindungselement auf einem Ende der Reaktionskammer angeordnet ist und das diesem Ende gegenüberliegende andere Ende der Reaktionskammer gasdicht verschlossen ist; wobei das Verbindungselement ein Flansch ist;
(ii) einer rohrförmigen Abführeinrichtung zur Abführung eines Ammoniak-Wasser-Gemisches aus der Reaktionskammer, wobei das rohrförmige Element in einem Bereich der Reaktionskammer angeordnet ist, der sich näher an dem Ende befindet, der den Flansch aufweist, als an dem Ende, welches gasdicht verschlossen ist;
(B) eine Einrichtung zur Beheizung der Innenwände der Reaktionskammer, die so eingerichtet ist, dass sie genügend Wärme erzeugen kann, die ausreicht, das beim Betrieb des Reaktors in der Reaktionskammer befindliche Harnstoff-Wasser-Gemisch der Thermohydrolyse von Harnstoff zu Ammoniak zu unterwerfen;
**dadurch gekennzeichnet, dass**
die Zuführeinrichtung ein Magnetventil aufweist, welches ausgangsseitig mit einer Lochscheibe versehen ist, und
wobei der Reaktor keinen Katalysator aufweist, der die Thermohydrolyse von Harnstoff zu Ammoniak katalysiert.

2. Reaktor in Form eines Zylinders oder Prismas zur Thermohydrolyse von Harnstoff zu Ammoniak, aufweisend:
(A) eine Reaktionskammer in Form eines Zylinders oder eines Prismas mit
(i) einer Zuführeinrichtung zur Zuführung eines Harnstoff-Wasser-Gemisches in die Reaktionskammer, wobei die Zuführeinrichtung über ein Verbindungselement mit der Reaktionskammer verbunden ist, und wobei die Zuführeinrichtung so eingerichtet ist, dass sie bei Zuführung des Harnstoff-Wasser-Gemisches in die Reaktionskammer das Kontaktieren des Harnstoff-Wasser-Gemisches mit dem Verbindungselement verhindert;
(ii) einer rohrförmigen Abführeinrichtung zur Abführung eines Ammoniak-Wasser-Gemisches aus der Reaktionskammer; wobei das Verbindungselement auf einem Ende der Reaktionskammer angeordnet ist und die Abführeinrichtung sich am gegenüberliegenden anderen Ende der Reaktionskammer befindet; wobei das Verbindungselement ein Flansch ist;
(B) eine Einrichtung zur Beheizung der Innenwände der Reaktionskammer, die so eingerichtet ist, dass sie genügend Wärme erzeugen kann, die ausreicht, das beim Betrieb des Reaktors in der Reaktionskammer befindliche Harnstoff-Wasser-Gemisch der Thermohydrolyse von Harnstoff zu Ammoniak zu unterwerfen;
**dadurch gekennzeichnet, dass**
die Zuführeinrichtung ein Magnetventil aufweist, welches ausgangsseitig mit einer Lochscheibe versehen ist, und
wobei der Reaktor keinen Katalysator aufweist, der die Thermohydrolyse von Harnstoff zu Ammoniak katalysiert.

3. Reaktor nach Anspruch 1 oder 2, wobei die Lochscheibe Löcher mit einem Durchmesser von 15 µm bis 500 µm aufweist.

4. Reaktor nach einem der vorstehenden Ansprüche, wobei die Lochscheibe 2 bis 10 Löcher aufweist.

5. Reaktor nach einem der vorstehenden Ansprüche, wobei die Einrichtung zur Zuführung von Wärme ein mineralisolierter Heizdraht ist und so eingerichtet ist, dass sie genügend Wärme erzeugt, um das zugeführte Harnstoff-Wasser-Gemisch zu thermohydrolisieren.

6. Reaktor nach einem der vorstehenden Ansprüche, wobei sich der Heizdraht auf den zylindrischen oder prismatischen Innenseiten der Reaktionskammer einschließlich der Innenseite des gasdicht verschlossenen Endes oder der Innenseite des Endes befindet, an dem sich die Abführeinrichtung befindet.

7. Vorrichtung, aufweisend:
(A) einen Reaktor wie in einem der vorstehenden Ansprüche definiert;
(B) eine Abgasleitung mit einem SCR-Katalysator;
wobei die Abführeinrichtung des Reaktors mit der Abgasleitung verbunden ist, derart, dass die Verbindungsstelle vor dem SCR-Katalysator liegt.

8. Kraftfahrzeug,
aufweisend einen Reaktor wie in einem der Ansprüche 1 bis 6 definiert; oder
aufweisend eine Vorrichtung wie in Anspruch 7 definiert.

9. Verfahren zur SCR-Katalyse von Stickoxiden, aufweisend die Stufen (A) bis (C):
(A) Zuführen eines Harnstoff-Wasser-Gemisches in eine Reaktionskammer eines Reaktors wie in einem der Ansprüche 1 bis 6 definiert, wobei die Reaktionskammer auf eine Temperatur im Bereich von 350 °C bis 650 °C beheizt ist;
(B) Abführen des in Stufe (A) gebildeten Ammoniak-Wasser-Gemisches aus der Reaktionskammer;
(C) Einspeisen des in (B) erhaltenen Ammoniak-Wasser-Gemisches in eine Abgasleitung mit einem SCR-Katalysator, wobei die Abführeinrichtung des Reaktors mit der Abgasleitung verbunden ist, derart, dass die Verbindungsstelle vor dem SCR-Katalysator liegt.

## Claims

1. A reactor in the form of a cylinder or prism for the thermohydrolysis of urea to ammonia, comprising
(A) a reaction chamber in the form of a cylinder or a prism with
(i) a feed device for feeding a urea-water mixture into the reaction chamber, wherein the feed device is connected to the reaction chamber via a connecting element, and wherein the feed device is arranged to prevent contact of the urea-water mixture with the connecting element when the urea-water mixture is fed into the reaction chamber;
wherein the connecting element is arranged on one end of the reaction chamber and the other end of the reaction chamber opposite this end is closed in a gas-tight manner; wherein the connecting element is a flange;
(ii) a tubular discharge device for discharging an ammonia-water mixture from the reaction chamber, wherein the tubular member is disposed in a region of the reaction chamber closer to the end comprising the flange than to the end which is closed in a gas-tight manner;
(B) a device for heating the inner walls of the reaction chamber which is arranged to generate sufficient heat to subject the urea-water mixture in the reaction chamber during operation of the reactor to thermohydrolysis of urea to ammonia;
**characterized in that**
the feed device comprises a solenoid valve which is provided with a perforated disk on the outlet side, and
wherein the reactor does not comprise a catalyst which catalyzes the thermohydrolysis of urea to ammonia.

2. The reactor in the form of a cylinder or prism for the thermohydrolysis of urea to ammonia, comprising
(A) a reaction chamber in the form of a cylinder or a prism with
(i) a feed device for feeding a urea-water mixture into the reaction chamber, wherein the feed device is connected to the reaction chamber via a connecting element, and wherein the feed device is arranged such that, when the urea-water mixture is fed into the reaction chamber, it prevents the urea-water mixture from coming into contact with the connecting element;
(ii) a tubular discharge device for discharging an ammonia-water mixture from the reaction chamber; wherein the connecting element is located at one end of the reaction chamber and the discharge device is located at the opposite other end of the reaction chamber; wherein the connecting element is a flange;
(B) a device for heating the inner walls of the reaction chamber which is arranged to generate sufficient heat to subject the urea-water mixture in the reaction chamber during operation of the reactor to thermohydrolysis of urea to ammonia;
**characterized in that**
the feed device comprises a solenoid valve which is provided with a perforated disk on the outlet side, and
wherein the reactor does not comprise a catalyst which catalyzes the thermohydrolysis of urea to ammonia.

3. The reactor according to claim 1 or 2, wherein the perforated disk comprises holes with a diameter of 15 µm to 500 µm.

4. The reactor according to any one of the preceding claims, wherein the perforated disk comprises 2 to 10 holes.

5. The reactor according to any one of the preceding claims, wherein the device for supplying heat is a mineral-insulated heating wire and is arranged to generate sufficient heat to thermohydrolize the supplied urea-water mixture.

6. The reactor according to any one of the preceding claims, wherein the heating wire is located on the cylindrical or prismatic inner sides of the reaction chamber including the inside of the end closed in a gas-tight manner or the inside of the end where the discharge device is located.

7. An apparatus comprising:
(A) a reactor as defined in any one of the preceding claims;
(B) an exhaust line with an SCR catalyst;
wherein the discharge device of the reactor is connected to the exhaust line such that the connection point is upstream of the SCR catalyst.

8. A motor vehicle,
comprising a reactor as defined in any one of claims 1 to 6; or
comprising an apparatus as defined in claim 7.

9. A method for SCR catalysis of nitrogen oxides, comprising the steps (A) to (C):
(A) feeding a urea-water mixture into a reaction chamber of a reactor as defined in any one of claims 1 to 6, wherein the reaction chamber is heated to a temperature in the range of 350°C to 650°C;
(B) discharging the ammonia-water mixture formed in step (A) from the reaction chamber;
(C) feeding the ammonia-water mixture obtained in (B) into an exhaust gas line with an SCR catalyst, the discharge device of the reactor being connected to the exhaust gas line in such a way that the connection point is upstream of the SCR catalyst.

## Revendications

1. Réacteur sous forme de cylindre ou de prisme pour la thermohydrolyse de l'urée en ammoniac, présentant :
(A) une chambre de réaction sous la forme d'un cylindre ou d'un prisme comportant
(i) un système d'amenée pour l'amenée d'un mélange d'urée-eau dans la chambre de réaction, où le système d'amenée est relié à la chambre de réaction par l'intermédiaire d'un élément de liaison, et où le système d'amenée est agencé de sorte qu'il empêche l'entrée en contact du mélange d'urée-eau avec l'élément de liaison lors de l'amenée du mélange d'urée-eau dans la chambre de réaction ;
où l'élément de liaison est disposé à une extrémité de la chambre de réaction et l'autre extrémité opposée à la première extrémité de la chambre de réaction est fermée de manière étanche au gaz, l'élément de liaison étant une bride ;
(ii) un système d'évacuation de forme tubulaire pour l'évacuation d'un mélange d'ammoniac-eau hors de la chambre de réaction, où l'élément de forme tubulaire est disposé dans une zone de la chambre de réaction qui se trouve plus près de l'extrémité qui présente la bride que de l'extrémité qui est fermée de manière étanche au gaz ;
(B) un système de chauffage des parois internes de la chambre de réaction qui est agencé de sorte qu'il peut produire suffisamment de chaleur pour soumettre le mélange d'urée-eau se trouvant dans la chambre de réaction lors du fonctionnement du réacteur à la thermohydrolyse de l'urée en ammoniac ;
**caractérisé en ce que**
le système d'amenée présente une vanne magnétique, qui est dotée du côté sortie d'un disque perforé, et
où le réacteur ne présente pas de catalyseur, qui catalyse la thermohydrolyse de l'urée en ammoniac.

2. Réacteur sous forme de cylindre ou de prisme pour la thermohydrolyse de l'urée en ammoniac, présentant :
(A) une chambre de réaction sous la forme d'un cylindre ou d'un prisme comportant
(i) un système d'amenée pour l'amenée d'un mélange d'urée-eau dans la chambre de réaction, où le système d'amenée est relié à la chambre de réaction par l'intermédiaire d'un élément de liaison, et où le système d'amenée est agencé de sorte qu'il empêche l'entrée en contact du mélange d'urée-eau avec l'élément de liaison lors de l'amenée du mélange d'urée-eau dans la chambre de réaction ;
(ii) un système d'évacuation de forme tubulaire pour l'évacuation d'un mélange d'ammoniac-eau hors de la chambre de réaction, où l'élément de liaison est disposé à une extrémité de la chambre de réaction et le système d'évacuation se trouve sur l'autre extrémité opposée de la chambre de réaction ; l'élément de liaison étant une bride ;
(B) un système de chauffage des parois internes de la chambre de réaction qui est agencé de sorte qu'il peut produire suffisamment de chaleur pour soumettre le mélange d'urée-eau se trouvant dans la chambre de réaction lors du fonctionnement du réacteur à la thermohydrolyse de l'urée en ammoniac ;
**caractérisé en ce que**
le système d'amenée présente une vanne magnétique, qui est dotée du côté sortie d'un disque perforé, et
où le réacteur ne présente pas de catalyseur, qui catalyse la thermohydrolyse de l'urée en ammoniac.

3. Réacteur selon la revendication 1 ou 2, dans lequel le disque perforé présente des trous ayant un diamètre de 15 µm à 500 µm.

4. Réacteur selon l'une des revendications précédentes, dans lequel le disque perforé présente 2 à 10 trous.

5. Réacteur selon l'une des revendications précédentes, dans lequel le système pour l'amenée de chaleur est un fil chauffant à isolation minérale et est agencé de sorte qu'il produise suffisamment de chaleur pour thermohydrolyser le mélange d'urée-eau amené.

6. Réacteur selon l'une des revendications précédentes, dans lequel le fil chauffant se trouve sur les faces internes cylindriques ou prismatiques de la chambre de réaction y compris la face interne de l'extrémité fermée de manière étanche au gaz ou la face interne de l'extrémité sur laquelle se trouve le système d'évacuation.

7. Dispositif, présentant :
(A) un réacteur tel que défini selon l'une des revendications précédentes ;
(B) une conduite d'échappement de gaz avec un catalyseur SCR ;
dans lequel le système d'évacuation du réacteur est relié à la conduite d'échappement de gaz, de sorte que le site de liaison réside avant le catalyseur SCR.

8. Véhicule,
présentant un réacteur tel que défini selon l'une des revendications 1 à 6 ; ou
présentant un dispositif tel que défini selon la revendication 7.

9. Procédé de catalyse SCR des oxydes d'azote, présentant les étapes (A) à (C) de :
(A) amenée d'un mélange d'urée-eau dans une chambre de réaction d'un réacteur tel que défini selon l'une des revendications 1 à 6, la chambre de réaction étant chauffée à une température dans la plage de 350°C à 650°C ;
(B) évacuation du mélange d'ammoniac-eau formé à l'étape (A) hors de la chambre de réaction ;
(C) alimentation du mélange d'ammoniac-eau obtenu à l'étape (B) dans une conduite de gaz d'échappement avec un catalyseur SCR, le système d'évacuation du réacteur étant relié à la conduite de gaz d'échappement de sorte que le site de liaison se situe avant le catalyseur SCR.
